# EUROPÄISCHE PATENTSCHRIFT

(11) **EP 3 645 317 B1**
(45) Veröffentlichungstag und Bekanntmachung des Hinweises auf die Patenterteilung: **22.09.2021**
(21) Anmeldenummer: 18719091.3
(22) Anmeldetag: 12.04.2018
(51) Int. Cl.: B60C 11/12

(54) **FAHRZEUGLUFTREIFEN**
PNEUMATIC VEHICLE TIRES
PNEUMATIQUE DE VÉHICULE

(30) Priorität: 30.06.2017 DE 102017211128
(43) Veröffentlichungstag der Anmeldung: 06.05.2020
(73) Patentinhaber: Continental Reifen Deutschland GmbH, 30165 Hannover (DE)
(72) Erfinder: BAUER, Claudia, 31542 Bad Nenndorf (DE); WIESE, Klaus, 30559 Hannover (DE); VENNEBÖRGER, Martin, 30625 Hannover (DE); BERGER, Christoph, 30173 Hannover (DE); SCHLITTENHARD, Jan, 30900 Wedemark (DE)
(74) Vertreter: Continental Corporation
(86) Internationale Anmeldenummer: PCT/EP2018/059373
(87) Internationale Veröffentlichungsnummer: WO 2019/001789

(56) Entgegenhaltungen:
- EP-A1- 1 580 034
- WO-A1-2015/086186
- WO-A1-2016/000854
- JP-A- H1 178 431
- JP-A- H02 189 203
- JP-A- H09 323 511
- JP-A- 2001 191 741
- JP-A- 2007 106 175
- US-A1- 2013 139 937
- US-A1- 2015 151 586

## Beschreibung

Die Erfindung betrifft einen Fahrzeugluftreifen mit einem laufrichtungsgebunden gestalteten Laufstreifen mit zu Schulterblockreihen gehörenden schulterseitigen Blöcken, welche je eine beim Abrollen des Fahrzeugluftreifens bei Vorwärtsfahrt zuerst in die Bodenaufstandsfläche eintretende einlaufende Blockkante und je eine aus der Bodenaufstandsfläche auslaufende Blockkante aufweisen, und mit mittleren Blöcken zwischen den schulterseitigen Blöcken, wobei die schulterseitigen Blöcke und die mittleren Blöcke jeweils mit zumindest zwei sich in Draufsicht im Wesentlichen parallel zueinander sowie unter einem Winkel von bis zu 35° zur axialen Richtung erstreckenden Einschnitten versehen sind, welche eine Breite von 0,4 mm bis 0,8 mm und an ihrer tiefsten Stelle eine Tiefe von mindestens 50% der Profiltiefe aufweisen, wobei die Blöcke jeweils mit mehreren, insbesondere zumindest vier, in Draufsicht im Wesentlichen parallel zu den Einschnitten verlaufenden Mikrorillen mit einer Breite von 0,2 mm bis 0,5 mm und einer Tiefe von 0,2 mm bis 0,5 mm versehen sind, wobei in jedem Block zwischen zumindest zwei Einschnitten eine Anzahl von Mikrorillen sowie zwischen den sonstigen Einschnitten jeweils zumindest eine Mikrorille verläuft.

Es ist bekannt, bei für den Wintereinsatz vorgesehenen Fahrzeugluftreifen die Blöcke des Laufstreifens gleichmäßig mit einer Vielzahl von parallel zueinander verlaufenden, sehr seichten Mikrorillen zu "überziehen". Im Gegensatz zu herkömmlichen in den Blöcken ausgebildeten Einschnitten schließen sich derartige Mikrorillen infolge ihrer geringen Tiefe nicht unter den beim Abrollen auftretenden Kräften. Die Mikrorillen verlaufen in Draufsicht üblicherweise in axialer Richtung oder unter einem von der axialen Richtung um bis zu 90° abweichenden Winkel. Die durch die Mikrorillen gebildete Oberflächenstruktur trägt bei neuem Reifen, insbesondere bei sogenannten "Softcompound"-Winterreifen, dazu bei, den sich beim Bremsen und beim Beschleunigen auf schnee- und/oder eisbedeckten Fahrbahnen bildenden Wasserfilm von der Oberfläche der Blöcke schnell wieder abzuleiten und den Laufstreifen derart zu entwässern. Die Höhe des sich auf der Fahrbahn bildenden Wasserfilms hängt unter anderem von der Umgebungstemperatur und der Intensität der Sonneneinstrahlung ab. Bei einer Umgebungstemperatur knapp unter 0°C und langer, intensiver Sonneneinstrahlung schmilzt beispielsweise besonders viel Eis und/oder Schnee, sodass sich ein hoher Wasserfilm bildet. Zum Fahren auf einer solchen Fahrbahn ist es vorteilhaft, wenn der Laufstreifen eine besonders ausgeprägte Oberflächenstruktur, also sehr viele Mikrorillen, aufweist. Ein derartiger Fahrzeugluftreifen, welcher auch ein Fahrzeugluftreifen der eingangs genannten Art ist, ist beispielsweise aus der WO 2015 086 186 A1 bekannt. Die vorgesehenen Mikrorillen weisen eine Breite von 0,2 mm bis 0,3 mm und eine Tiefe von 0,2 mm bis 0,3 mm auf. Durch die Vielzahl von Mikrorillen ist jedoch die Kontaktfläche des Laufstreifens zum Untergrund reduziert, was für die Kraftübertragung vom Reifen auf den Untergrund nachteilig ist. Eine simple Reduzierung der Anzahl der Mikrorillen wäre jedoch für die Wasserableitung nachteilig.

Aus der EP 1 580 034 A1 ist ein Fahrzeugluftreifen mit einem Laufstreifen mit Profilblöcken, welche Mikrorillen, die eine Tiefe von 1,5 mm bis 3,0 mm und eine Breite von 0,4 mm bis 0,8 mm aufweisen, bekannt. Gemäß einem Ausführungsbeispiel sind Profilblöcke vorgesehen, welche jeweils mit vier parallel zueinander verlaufenden Einschnitten versehen sind, wobei zwischen den zwei mittleren Einschnitten zwei parallel zu den Einschnitten ausgerichtete Mikrorillen verlaufen und zwischen den sonstigen Einschnitten sowie den blockrandseitig verlaufenden Einschnitten und dem Blockrandbereich jeweils eine einzige Mikrorille verläuft. Ferner sind die Profilblöcke mit im Wesentlichen in Umfangsrichtung verlaufenden Mikrorillen versehen, welche die Einschnitte und die zu diesen parallel verlaufenden Mikrorillen kreuzen.

Der Erfindung liegt die Aufgabe zugrunde, einen Reifen der eingangs genannten Art am Laufstreifen derart zu gestalten, dass eine Ableitung des oben erwähnten Wasserfilms über Mikrorillen gewährleistet und gleichzeitig die Kontaktfläche der Profilblöcke bei neuem Reifen ausreichend groß ist, sodass eine gute Kraftübertragung vom Reifen auf den Untergrund sichergestellt ist.

Die gestellte Aufgabe wird erfindungsgemäß dadurch gelöst, dass in jedem Block zwischen zumindest einem der blockrandseitig verlaufenden Einschnitte und dem Blockrandbereich lediglich eine einzige Mikrorille verläuft und wobei schulterseitige Blöcke mit zumindest drei Einschnitten vorgesehen sind, in welchen die Anzahl der Mikrorillen zwischen den Einschnitten von der einlaufenden Blockkante zur auslaufenden Blockkante abnimmt.

Vorzugsweise ist zwischen jedem der beiden blockrandseitig verlaufenden Einschnitte und dem Blockrandbereich je eine einzige Mikrorille vorgesehen.

Gemäß der Erfindung sind daher die Blöcke des Laufstreifens mit einer definierten sowie gegenüber der WO 2015 086 186 A1 deutlich geringeren Anzahl an Mikrorillen versehen. Beim Fahren auf schnee- und/ oder eisbedeckten Fahrbahnen ist die sich beim Abrollvorgang auf Schnee bzw. auf Eis bildende Schmelzwassermenge an den Blockrandbereichen geringer als in der Blockmitte. An den Blockrandbereichen ist erfindungsgemäß jeweils eine einzige Mikrorille ausbildet, welche die geringeren Schmelzwassermengen aufnehmen kann. In den mittleren Bereichen der Blöcke bildet sich mehr Schmelzwasser als an den Blockrandbereichen. Dieses wird durch die zwischen zumindest zwei Einschnitten jedes Blockes verlaufenden zumindest zwei Mikrorillen sowie durch die weiteren Mikrorillen aufgenommen und abgeleitet. Die Blöcke weisen somit auch eine größere Kontaktfläche zum Untergrund auf, wodurch eine gute Kraftübertragung vom Reifen auf den Untergrund sichergestellt ist.

In den schulterseitigen Blöcken sind nahe der einlaufenden Blockkante mehr Mikrorillen als nahe der auslaufenden Blockkante ausgebildet. Beim Bremsvorgang auf Schnee und/oder Eis steigt der sich bildende Schmelzwasserfilm von der auslaufenden Blockkante (Bremskante) zur einlaufenden Bremskante an. Unter Traktionsbelastung steigt der Schmelzwasserfilm von der einlaufenden Blockkante (Traktionskante) zur auslaufenden Blockkante an. Da dem Bremsvorgang häufig sehr kritische Fahrsituationen zu Grund liegen, ist es vorteilhaft, die Mikrorillen gemäß dieser bevorzugten Variante zu positionieren. Die beschriebene Ausgestaltung der schulterseitigen Blöcke ist daher einerseits hinsichtlich der Wasserableitung des Wasserfilms über die Mikrorillen günstig und andererseits weisen die Blöcke weiterhin eine verhältnismäßig große Kontaktfläche zum Untergrund auf, was wiederum für die Kraftübertragung vom Reifen auf den Untergrund von Vorteil ist.

Gemäß einer bevorzugten Ausführungsvariante beträgt die Anzahl der zwischen den zumindest zwei Einschnitten verlaufenden Mikrorillen zwei. Gemäß einer alternativen bevorzugten Ausführungsvariante beträgt die Anzahl der zwischen den zumindest zwei Einschnitten verlaufenden Mikrorillen drei. Sind drei Mikrorillen vorgesehen, beträgt die Breite der drei Mikrorillen vorzugsweise jeweils höchstens 0,3 mm. Ferner beträgt die Tiefe solcher Mikrorillen insbesondere jeweils höchstens 0,3 mm. Diese Maßnahmen sind für die Stabilität der Blöcke und eine gute Kraftübertragung besonders vorteilhaft. Gemäß einer weiteren bevorzugten Ausführungsvariante weisen die schulterseitigen Blöcke parallel zueinander oder im Wesentlichen parallel zueinander verlaufende Blockkanten auf, wobei sich die Einschnitte und Mikrorillen im Wesentlichen parallel zu den Blockkanten erstrecken.

Weitere Merkmale, Vorteile und Einzelheiten der Erfindung werden nun anhand der Zeichnung, die schematisch ein Ausführungsbeispiel der Erfindung darstellt, näher beschrieben. Dabei zeigen
Fig. 1 eine Draufsicht auf eine Teilabwicklung eines Laufstreifens eines Fahrzeugluftreifens mit einer Ausführungsvariante der Erfindung und
Fig. 2 eine vergrößerte Draufsicht auf zwei schulterseitige Profilblöcke des Laufstreifens aus Fig. 1.

Erfindungsgemäß ausgeführte Fahrzeugluftreifen sind insbesondere Winterreifen in Radialbauart für Personenkraftwagen, Vans oder Light-Trucks.

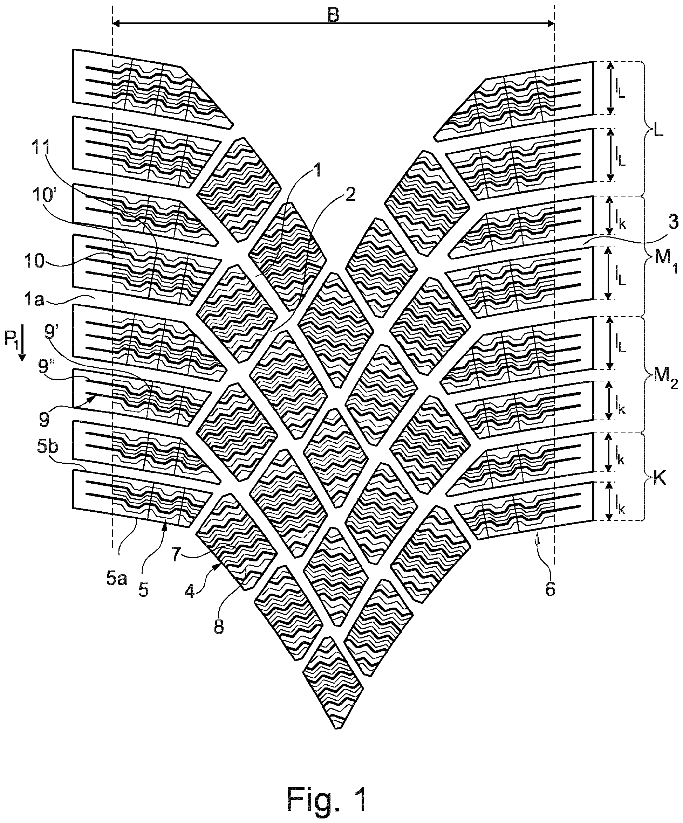

Der in Fig. 1 gezeigte Laufstreifen weist in jeder Laufstreifenhälfte im Wesentlichen parallel zueinander verlaufende Schrägrillen 1 auf, welche die Hauptrillen des Laufstreifens sind, sich von der Laufstreifenmitte bis zu den Laufstreifenrändern erstrecken und dem Laufstreifen in Draufsicht ein gepfeiltes Profil verleihen. Die Abrollrichtung des Reifens bei Vorwärtsfahrt ist durch den Pfeil P₁ angedeutet und derart, dass die Schrägrillen 1 bei Vorwärtsfahrt zuerst mit ihren laufstreifeninnenseitigen Enden in die Bodenaufstandsfläche eintreten. Die Breite B der Bodenaufstandsfläche entspricht der Breite des statisch ermittelten Footprints bei einer Last von 70 % der maximalen Tragfähigkeit bei einem Innendruck von 85 %, ermittelt gemäß E.T.R.T.O.-Standards.

Der Laufstreifen ist gemäß einem Verfahren der Pitchlängenvariation geräuschoptimiert und setzt sich aus in Umfangsrichtung aufeinanderfolgenden Pitches (gleichartig gestalteten Profilabschnitten) zusammen, wobei bei dem gezeigten Ausführungsbeispiel Pitches L, M₁, M₂, K mit drei unterschiedlichen Umfangslängen vorgesehen sind. Der Pitch L weist die größte Umfangslänge, die Pitches M₁ und M₂ weisen eine übereinstimmend große mittlere Umfangslänge und der Pitch K weist die kleinste Umfangslänge auf. Die Pitches L, M₁,M₂, K werden über den Laufstreifenumfang innerhalb einer sogenannten Pitchfolge, die üblicherweise rechnerisch ermittelt wird, angeordnet. Jeder Pitch L, M₁,M₂, K umfasst einen in Draufsicht im Wesentlichen V-förmigen Profilabschnitt, welcher sich aus je einer der Schrägrillen 1 aus jeder der beiden Laufstreifenhälften und der an diese in Umfangsrichtung anschließenden Profilstrukturen zusammensetzt.

In jeder Laufstreifenhälfte verlaufen zwischen in Umfangsrichtung benachbarten Schrägrillen 1 jeweils drei Rillen 2, welche beispielsweise unter einem Winkel von 10° bis 50° sowie bezogen auf die Umfangsrichtung gegensinnig zu den Schrägrillen 1 verlaufen. Die Rillen 2 begrenzen gemeinsam mit den Schrägrillen 1 in jedem Pitch L, M₁,M₂, K fünf in Draufsicht im Wesentlichen parallelogrammförmige mittlere Blöcke 4, welche infolge des Verlaufes der Schrägrillen 1 und der Rillen 2 beim gezeigten Ausführungsbeispiel in Umfangsrichtung auf "Spitzen" stehend angeordnet sind, wobei diese "Spitzen" abgestumpfte Eckbereiche sind. Die Schrägrillen 1 erstrecken sich in jenem Bereich, in welchem sie die mittleren Blöcke 4 voneinander trennen, in Draufsicht zumindest über den Großteil ihrer Erstreckung unter einem Winkel von vorzugsweise 30° bis 60° zur Umfangsrichtung. Ferner weist jede Schrägrille 1 einen in Draufsicht in Querrichtung oder, wie in Fig. 1 gezeigt, unter einem von der Querrichtung bis zu 20°, insbesondere um bis zu 12°, abweichenden Winkel verlaufenden Rillenabschnitt 1a auf, welcher, wie noch genauer beschrieben wird, zu Schulterblockreihen 6 gehörende schulterseitige Blöcke 5 voneinander trennt.

Jeder mittlere Block 4 ist mit vier bis neun, beim gezeigten Ausführungsbeispiel sechs oder sieben, gleichmäßig über den jeweiligen mittleren Block 4 verteilten Einschnitten 7 versehen, welche sich innerhalb jedes Blockes 4 parallel zueinander sowie zur axialen Richtung unter einem Winkel von bis zu 35° erstrecken, in Draufsicht jeweils zick-zackförmig, alternativ wellenförmig, verlaufen und den jeweiligen mittleren Block 4 durchqueren. Jeder Einschnitt 7 weist eine Breite von 0,4 mm bis 0,8 mm sowie in radialer Richtung an seiner tiefsten Stelle eine Tiefe von mindestens 50% der Profiltiefe auf, wobei die Profiltiefe für die betreffenden Fahrzeugluftreifen üblicherweise 6,5 mm bis 9,0 mm beträgt. Bevorzugter Weise weist jeder Einschnitt 7 an seiner bzw. seinen seichtesten Stelle(n) ein Tiefe von mindestens 20% der Profiltiefe auf. Vorzugsweise weisen die Einschnitte 7 ferner in bekannter Weise in eine Schrägrille 1 bzw. Rille 2 einmündende, seichtere randseitige Endabschnitte auf.

Die mittleren Blöcke 4 sind ferner jeweils mit einer Anzahl von Mikrorillen 8 versehen, welche sowohl zwischen Einschnitten 7 als auch zwischen dem in Umfangsrichtung jeweils randseitigen Einschnitt 7 und dem dort befindlichen Blockeckbereich ausgebildet sind, in Draufsicht parallel oder zumindest weitgehend parallel zu den Einschnitten 7 verlaufen und die Blöcke 4 durchqueren. In jedem Block 4 verläuft bei den Blockeckbereichen jeweils eine einzige Mikrorille 8, wobei diese Mikrorillen 8 zum benachbarten randseitigen Einschnitt 7 übereinstimmende Abstände aufweisen. Zwischen jedem randseitigen Einschnitt 7 und dem zu diesem unmittelbar benachbarten Einschnitt 7 ist mittig ebenfalls jeweils eine einzige Mikrorille 8 ausgebildet. Zwischen sämtlichen weiteren Einschnitten 7 verlaufen jeweils zwei Mikrorillen 8. Die Mikrorillen 8 weisen eine Breite und eine Tiefe von jeweils 0,2 mm bis 0,5 mm auf.

Zwischen den in Umfangsrichtung benachbarten Rillenabschnitten la der Schrägrillen 1 sind innerhalb jedes Pitches L, M₁,M₂, K je zwei schulterseitigen Blöcke 5, durch eine Querrille 3 voneinander getrennt, vorgesehen. Die Querrillen 3 verlaufen in Draufsicht im Wesentlichen parallel zu den Rillenabschnitten 1a und münden laufstreifeninnenseitig in eine Schrägrille 1 bzw. in eine der in der betreffenden Laufstreifenhälfte jeweils am weitesten laufstreifenaußenseitig verlaufende Rille 2.

Die Schrägrillen 1 begrenzen gemeinsam mit den am weitesten laufstreifenaußenseitig verlaufenden Rillen 2 und den Querrillen 3 die schulterseitigen Blöcke 5, welche in Rillenlaufrichtung der Querrillen 3 langgestreckt sind. Der Pitch L umfasst in jeder Schulterblockreihe 6 zwei schulterseitige Blöcke 5 mit jeweils einer Umfangslänge l_{L}. Die Pitches M₁,M₂ umfassen in jeder Schulterblockreihe 6 zwei schulterseitige Blöcke 5, von welchen der eine die Umfangslänge l_{L} und der andere eine Umfangslänge l_{K} aufweist, wobei l_{K} < l_{L} gilt und wobei die schulterseitigen Blöcke 5 mit den Umfangslängen l_{L} beim gezeigten Ausführungsbeispiel in Umfangsrichtung unmittelbar benachbart sind. Der Pitch K umfasst in jeder Schulterblockreihe 6 zwei schulterseitige Blöcke 5, von welchen jeder die Umfangslänge l_{K} aufweist.

Jeder schulterseitige Block 5 weist an der Laufstreifenperipherie eine beim Abrollen des Fahrzeugluftreifens bei Vorwärtsfahrt zuerst in die Bodenaufstandsfläche eintretende einlaufenden Blockkante 5a und eine aus der Bodenaufstandsfläche auslaufende Blockkante 5b auf, wobei die Blockkanten 5a, 5b parallel zueinander verlaufen.

Jeder schulterseitige Block 5 ist mit gleichmäßig über den Block 5 verteilten Einschnitten 9 versehen, welche in Draufsicht parallel zueinander verlaufen, sich im Wesentlichen parallel zu den Blockkanten 5a, 5b erstrecken und laufstreifeninnenseitig in eine Rille 2 bzw. in eine Schrägrille 1 einmünden. Jeder Einschnitt 9 weist eine Breite von 0,4 mm bis 0,8 mm sowie in radialer Richtung an der tiefsten Stelle eine Tiefe auf, welche mindestens 2,5 mm geringer ist als die vorgesehene Profiltiefe. Bevorzugter Weise weist jeder Einschnitt 9 innerhalb der Bodenaufstandsfläche an seiner bzw. seinen seichtesten Stelle(n) ein Tiefe von mindestens 20% der Profiltiefe auf. Ferner weisen die Einschnitte 9 insbesondere in bekannter Weise ausgeführte in eine Schrägrille 1 bzw. eine Rille 2 einmündende, seichtere randseitige Endabschnitte auf. Die Einschnitte 9 werden zu ihren laufstreifenaußenseitigen Enden in bekannter Weise seichter.

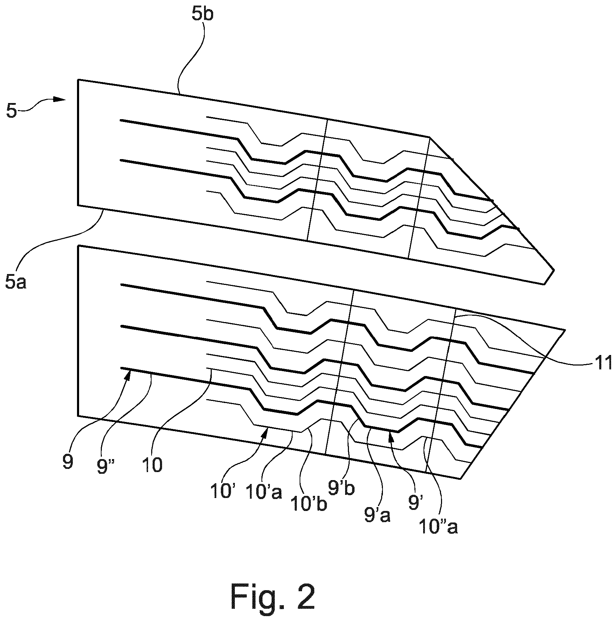

Wie insbesondere Fig. 2 zeigt, weist jeder Einschnitt 9 innerhalb der Breite B einen Hauptabschnitt 9' und laufstreifenaußenseitig einen in Draufsicht parallel zu den Blockkanten 5a, 5b verlaufenden Endabschnitt 9" auf. Der Hauptabschnitt 9' verläuft in Draufsicht in der Gestalt von aneinander anschließenden, abwechselnd in die eine und in die andere Umfangsrichtung weisenden, basislosen gleichschenkeligen Trapezen, wobei die unmittelbar aneinander angrenzenden Trapeze gemeinsame Trapezschenkel besitzen. Der Hauptabschnitt 9' setzt sich daher abwechselnd aus in Draufsicht parallel zu den Blockkanten 5a, 5b verlaufenden Teilabschnitten 9'a und Trapezschenkel bildenden Teilabschnitten 9'b zusammen. Die Trapezschenkel bildenden Teilabschnitte 9'b schließen mit den Teilabschnitten 9'a in Draufsicht jeweils einen Winkel von 110° bis 160° ein. Die Teilabschnitte 9'b weisen eine Länge von 2,0 mm bis 6,0 mm auf.

Die schulterseitigen Blöcke 5 sind ferner mit zwischen den Einschnitten 9 verlaufenden Mikrorillen 10 und mit je einer zwischen den randseitigen Einschnitten 9 und den Blockkanten 5a, 5b verlaufenden und daher bei den in Umfangsrichtung liegenden Blockrandbereichen ausgebildeten Mikrorille 10' versehen. Die Mikrorillen 10, 10' weisen eine Breite und eine Tiefe von 0,2 mm bis 0,5 mm auf und münden laufstreifeninnenseitig in eine Schrägrille 1 bzw. in eine Rille 2.

In jedem schulterseitigen Block 5 verlaufen zwischen zwei der vorgesehenen Einschnitte 9 zwei Mikrorillen 10, wobei zwischen sämtlichen weiteren in jedem schulterseitigen Block 5 vorgesehenen Einschnitten 9 nur eine einzige Mikrorille 10 verläuft. Befindet sich zwischen den Einschnitten 9 eine einzige Mikrorille 10, verläuft diese mittig zwischen den Einschnitten 9. Jene beiden Mikrorillen 10, die zwischen zwei Einschnitten 9 verlaufen, sind derart angeordnet, dass der Abstand zwischen ihnen und ihr Abstand zum jeweils benachbarten Einschnitt 9 zumindest über den Großteil der Erstreckung der Mikrorillen 10 gleich groß sind.

Wie insbesondere Fig. 2 zeigt, weisen die Mikrorillen 10 in Draufsicht eine zu den Einschnitten 9 übereinstimmende Gestaltung auf und verlaufen daher in Form von aneinander anschließenden, abwechselnd in die eine und in die andere Umfangsrichtung weisenden, basislosen gleichschenkeligen Trapezen. Die zwischen den Einschnitten 9 vorgesehenen Mikrorillen 10 verlaufen in Draufsicht im Wesentlichen parallel zu den Einschnitten 9.

Auch die blockrandseitig verlaufenden Mikrorillen 10' setzen sich daher in Draufsicht aus trapezförmigen Abschnitten zusammen, wobei ihr Verlauf derart ist, dass sie über ihre gesamte Erstreckung bzw. im Wesentlichen über ihre gesamte Erstreckung einen konstanten Abstand zum jeweiligen randseitigen Einschnitt 9 aufweisen. Die Mikrorillen 10' weisen daher parallel zu den Blockkanten 5a, 5b ausgerichtete, näher zur jeweiligen Blockkante 5a, 5b befindliche Teilabschnitte 10'a und parallel zu den Blockkanten 5a, 5b ausgerichtete, weiter von der jeweiligen Blockkante 5a, 5b entfernt befindliche Teilabschnitte 10"a auf, wobei die Teilabschnitte 10'a und Teilabschnitte 10"a innerhalb jeder Mikrorille 10' einander abwechseln und über Trapezschenkel bildende Teilabschnitte 10'b verbunden sind. Die Länge der Teilabschnitte 10'a, 10"a, 10'b der Mikrorillen 10' ist an die Länge der Teilabschnitte 9'a und 9'b der Einschnitte 9 entsprechend des beschriebenen konstanten Abstandes der Mikrorillen 10' zu den Einschnitten 9 angepasst, wobei die Länge der Teilabschnitte 10'a 3,0 mm bis 9,0 mm und die Länge der Teilabschnitte 10"a 0,5 mm bis 5,0 mm beträgt.

Schulterseitige Blöcke 5 mit der Umfangslänge lₖ weisen lediglich zwei Einschnitte 9 und daher zwei zwischen diesen verlaufende Mikrorillen 10 auf. Schulterseitige Blöcke 5 mit der Umfangslänge l_{L} weisen drei Einschnitte 9 auf. Zwischen zwei dieser Einschnitte 9 verlaufen zwei Mikrorillen 10, vorzugsweise ist einer dieser Einschnitte 9 jener, welcher der einlaufenden Blockkante 5a benachbart verläuft.

Beim gezeigten Ausführungsbeispiel sind in jedem schulterseitigen Block 5 ferner zwei oder drei Mikrorillen 11 ausgebildet, welche in Draufsicht senkrecht oder im Wesentlichen senkrecht zu den Blockkanten 5a, 5b verlaufen und parallel zu den Blockkanten 5a, 5b verlaufende Teilabschnitte 9'a der Hauptabschnitte 9' der Einschnitte 9 und Teilabschnitte 10'a und 10"a der Mikrorillen 10' sowie Mikrorillen 10 schneiden. Die Mikrorillen 11 verlaufen in Draufsicht zur Umfangsrichtung unter einem Winkel von bis 13°, insbesondere von bis zu 10°, und können alternativ in Umfangsrichtung verlaufen.

Die Erfindung ist auf das beschriebene Ausführungsbeispiel nicht beschränkt. Insbesondere kann in den mittleren Blöcken 4 und den schulterseitigen Blöcken 5 jeweils auch nur in einem der beiden in Umfangsrichtung liegende Blockeckbereichen eine einzige zum randseitigen Einschnitt benachbart verlaufende Mikrorille ausgebildet sein. Ferner können zwischen benachbarten Einschnitten bis zu drei Mikrorillen verlaufen, welche vorzugsweise eine Breite von 0,2 mm bis 0,3 mm und eine Tiefe von 0,2 mm bis 0,3 mm aufweisen. Die Rillen können ferner im mittleren Bereich des Laufstreifens derart verlaufen und ausgebildet sein, dass sich die Einschnitte und Mikrorillen zu Blockkanten parallel erstrecken. Die Querrillen 3 und die Schrägrillen 1 können derart ausgeführt sein, dass ihre an der Laufstreifenperipherie ermittelte Breite zu den Außenseiten des Laufstreifens geringfügig zunimmt, sodass die Blockkanten 5a, 5b in Draufsicht im Wesentlichen parallel zueinander verlaufen.

Die Einschnitte und die Mikrorillen innerhalb jedes Blockes verlaufen vorzugsweise derart, dass ihre in Draufsicht jeweils in Erstreckungsrichtung ausgerichteten Mittellinien, unter Vernachlässigung der gekrümmten Außenkontur des Laufstreifens bzw. des Fahrzeugluftreifens, parallel zueinander verlaufen. Im Rahmen der gegenständlichen Erfindung verlaufen Einschnitte und Mikrorillen in diesem Sinne daher im Wesentlichen parallel oder parallel zueinander.

### Bezugsziffernliste

- 1: Schrägrille
- 1a: Rillenabschnitt
- 2: Rille
- 3: Querrille
- 4: mittlerer Block
- 5: schulterseitiger Block
- 5a, 5b: Blockkanten
- 6: Schulterblockreihe
- 7: Einschnitt
- 8: Mikrorille
- 9: Einschnitt
- 9': Hauptabschnitt
- 9": Endabschnitt
- 9'a, 9'b: Teilabschnitt
- 10, 10': Mikrorille
- 10'a, 10"a, 10'b: Teilabschnitt
- 11: Mikrorille
- P₁: Pfeil
- K, L, M₁, M₂: Pitch
- l_{L}, l_{K}: Länge

## Patentansprüche

1. Fahrzeugluftreifen mit einem laufrichtungsgebunden gestalteten Laufstreifen mit zu Schulterblockreihen (6) gehörenden schulterseitigen Blöcken (5), welche je eine beim Abrollen des Fahrzeugluftreifens bei Vorwärtsfahrt zuerst in die Bodenaufstandsfläche eintretende einlaufende Blockkante (5a) und je eine aus der Bodenaufstandsfläche auslaufende Blockkante (5b) aufweisen, und mit mittleren Blöcken (4) zwischen den schulterseitigen Blöcken (5), wobei die schulterseitigen Blöcke (5) und die mittleren Blöcke (4) jeweils mit zumindest zwei sich in Draufsicht im Wesentlichen parallel zueinander sowie unter einem Winkel von bis zu 35° zur axialen Richtung erstreckenden Einschnitten (7, 9) versehen sind, welche eine Breite von 0,4 mm bis 0,8 mm und an ihrer tiefsten Stelle eine Tiefe von mindestens 50% der Profiltiefe aufweisen, wobei die schulterseitigen Blöcke (5) und die mittleren Blöcke (4) jeweils mit mehreren, insbesondere zumindest vier, in Draufsicht im Wesentlichen parallel zu den Einschnitten (7, 9) verlaufenden Mikrorillen (8, 10, 10') mit einer Breite von 0,2 mm bis 0,5 mm und einer Tiefe von 0,2 mm bis 0,5 mm versehen sind, wobei in jedem Block (4, 5) zwischen den zumindest zwei Einschnitten (7, 9) zumindest zwei Mikrorillen (8, 10) verlaufen, wobei in jedem der mittleren Blöcke (4) zwischen sonstigen benachbarten Einschnitten (7) jeweils zumindest eine Mikrorille (8) verläuft, wobei in schulterseitigen Blöcken (5), die mit mehr als zwei Einschnitten (9) versehen sind, zwischen sonstigen benachbarten Einschnitten (9) zumindest eine Mikrorille (10) verläuft,
**dadurch gekennzeichnet,**
**dass** in jedem Block (4, 5) zwischen zumindest einem der blockrandseitig verlaufenden Einschnitte (7, 9) und dem Blockrandbereich lediglich eine einzige Mikrorille (8, 10') verläuft und
wobei schulterseitige Blöcke (5) mit zumindest drei Einschnitten (9) vorgesehen sind, in welchen die Anzahl der Mikrorillen (10) zwischen den Einschnitten (9) von der einlaufenden Blockkante (5a) zur auslaufenden Blockkante (5b) abnimmt.

2. Fahrzeugluftreifen nach Anspruch 1, **dadurch gekennzeichnet, dass** zwischen jedem der beiden blockrandseitig verlaufenden Einschnitte (7, 9) und dem Blockrandbereich je eine einzige Mikrorille (8, 10') verläuft.

3. Fahrzeugluftreifen nach Anspruch 1 oder 2, **dadurch gekennzeichnet, dass** die Anzahl der zwischen den zumindest zwei Einschnitten (7, 9) verlaufenden Mikrorillen (8, 10) zwei beträgt.

4. Fahrzeugluftreifen nach Anspruch 1 oder 2, **dadurch gekennzeichnet, dass** die Anzahl der zwischen den zumindest zwei Einschnitten (7, 9) verlaufenden Mikrorillen (8, 10) drei beträgt.

5. Fahrzeugluftreifen nach Anspruch 4, **dadurch gekennzeichnet, dass** die Breite der drei Mikrorillen jeweils höchstens 0,3 mm beträgt.

6. Fahrzeugluftreifen nach Anspruch 4, **dadurch gekennzeichnet, dass** die Tiefe der drei Mikrorillen jeweils höchstens 0,3 mm beträgt

7. Fahrzeugluftreifen nach einem der Ansprüche 1 bis 6, **dadurch gekennzeichnet, dass** die einlaufenden und auslaufenden Blockkanten (5a, 5b) der schulterseitigen Blöcke (5) parallel zueinander oder im Wesentlichen parallel zueinander verlaufen, wobei sich die Einschnitte (9) und Mikrorillen (10) im Wesentlichen parallel zu den einlaufenden und auslaufenden Blockkanten (5a, 5b) erstrecken.

## Claims

1. Pneumatic vehicle tyre with a directional tread comprising shoulder-side blocks (5), which belong to shoulder block rows (6) and each have a leading block edge (5a), arriving first in the ground contact area when the pneumatic vehicle tyre is rolling during forward travel, and a trailing block edge (5b), leaving the ground contact area, and comprising central blocks (4) between the shoulder-side blocks (5), wherein the shoulder-side blocks (5) and the central blocks (4) are respectively provided with at least two sipes (7, 9) which extend substantially parallel to one another in plan view and at an angle of up to 35° in relation to the axial direction and which have a width of 0.4 mm to 0.8 mm and at their deepest point a depth of at least 50% of the profile depth, wherein the shoulder-side blocks (5) and the central blocks (4) are respectively provided with multiple, in particular at least four, micro-grooves (8, 10, 10'), which extend substantially parallel to the sipes (7, 9) in plan view and have a width of 0.2 mm to 0.5 mm and a depth of 0.2 mm to 0.5 mm, wherein at least two micro-grooves (8, 10) run between the at least two sipes (7, 9) in each block (4, 5), wherein in each of the central blocks (4) at least one micro-groove (8) respectively runs between otherwise adjacent sipes (7), wherein in shoulder-side blocks (5) that are provided with more than two sipes (9) at least one micro-groove (10) runs between otherwise adjacent sipes (9),
**characterized**
**in that** in each block (4, 5) only a single micro-groove (8, 10') runs between at least one of the sipes (7, 9) running at the edge of the block and the block edge region and
wherein shoulder-side blocks (5) with at least three sipes (9) are provided, in which blocks the number of micro-grooves (10) between the sipes (9) decreases from the leading block edge (5a) to the trailing block edge (5b).

2. Pneumatic vehicle tyre according to Claim 1, **characterized in that** a single micro-groove (8, 10') respectively runs between each of the two sipes (7, 9) running at the edge of the block and the block edge region.

3. Pneumatic vehicle tyre according to Claim 1 or 2, **characterized in that** the number of micro-grooves (8, 10) running between the at least two sipes (7, 9) is two.

4. Pneumatic vehicle tyre according to Claim 1 or 2, **characterized in that** the number of micro-grooves (8, 10) running between the at least two sipes (7, 9) is three.

5. Pneumatic vehicle tyre according to Claim 4, **characterized in that** the width of the three micro-grooves is in each case at most 0.3 mm.

6. Pneumatic vehicle tyre according to Claim 4, **characterized in that** the depth of the three micro-grooves is in each case at most 0.3 mm.

7. Pneumatic vehicle tyre according to one of Claims 1 to 6, **characterized in that** the leading and trailing block edges (5a 5b) of the shoulder-side blocks (5) run parallel to one another or substantially parallel to one another, wherein the sipes (9) and micro-grooves (10) extend substantially parallel to the leading and trailing block edges (5a, 5b).

## Revendications

1. Pneumatique de véhicule, comprenant une bande de roulement conçue en tenant compte du sens de la marche et dotée de blocs côté épaulement (5) appartenant à des rangées de blocs d'épaulement (6) et qui présentent respectivement un bord de bloc entrant (5a) pénétrant en premier dans la surface de contact avec le sol lorsque le pneumatique de véhicule roule en marche avant et respectivement un bord de bloc (5b) sortant de la surface de contact avec le sol, et dotée de blocs centraux (4) entre les blocs côté épaulement (5), les blocs côté épaulement (5) et les blocs centraux (4) étant respectivement munis d'au moins deux entailles (7, 9) s'étendant en vue de dessus substantiellement en parallèle l'une à l'autre ainsi que selon un angle de jusqu'à 35° par rapport à la direction axiale, lesdites entailles présentant une largeur de 0,4 mm à 0,8 mm et présentant au point le plus bas une profondeur d'au moins 50 % de la profondeur de profil, les blocs côté épaulement (5) et les blocs centraux (4) étant respectivement munis de plusieurs, en particulier d'au moins quatre, microrainures (8, 10, 10') s'étendant en vue de dessus substantiellement en parallèle aux entailles (7, 9) et d'une largeur de 0,2 mm à 0,5 mm et d'une profondeur de 0,2 mm à 0,5 mm, dans lequel, dans chaque bloc (4, 5), au moins deux microrainures (8, 10) s'étendent entre les au moins deux entailles (7, 9), dans lequel, dans chacun des blocs centraux (4), respectivement au moins une microrainure (8) s'étend entre diverses entailles voisines (7), dans lequel, dans des blocs côté épaulement (5) qui sont munis de plus de deux entailles (9), au moins une microrainure (10) s'étend entre diverses entailles voisines (9),
**caractérisé en ce que** dans chaque bloc (4, 5), seulement une seule microrainure (8, 10') s'étend entre au moins l'une des entailles (7, 9) s'étendant du côté du bord de bloc et la zone de bord de bloc, et
dans lequel des blocs côté épaulement (5) dotés d'au moins trois entailles (9) sont prévus dans lesquels le nombre des microrainures (10) entre les entailles (9) diminue du bord de bloc entrant (5a) en direction du bord de bloc sortant (5b).

2. Pneumatique de véhicule selon la revendication 1, **caractérisé en ce que** respectivement une seule microrainure (8, 10') s'étend entre chacune des deux entailles (7, 9) s'étendant du côté du bord de bloc et la zone de bord de bloc.

3. Pneumatique de véhicule selon la revendication 1 ou 2, **caractérisé en ce que** le nombre des microrainures (8, 10) s'étendant entre les au moins deux entailles (7, 9) est égal à deux.

4. Pneumatique de véhicule selon la revendication 1 ou 2, **caractérisé en ce que** le nombre des microrainures (8, 10) s'étendant entre les au moins deux entailles (7, 9) est égal à trois.

5. Pneumatique de véhicule selon la revendication 4, **caractérisé en ce que** la largeur des trois microrainures est respectivement au maximum égale à 0,3 mm.

6. Pneumatique de véhicule selon la revendication 4, **caractérisé en ce que** la profondeur des trois microrainures est respectivement au maximum égale à 0,3 mm.

7. Pneumatique de véhicule selon l'une quelconque des revendications 1 à 6, **caractérisé en ce que** les bords de bloc entrant et sortant (5a, 5b) des blocs côté épaulement (5) s'étendent en parallèle, ou substantiellement en parallèle, les uns aux autres, les entailles (9) et les microrainures (10) s'étendant substantiellement en parallèle aux bords de bloc entrant et sortant (5a, 5b).
